# EUROPEAN PATENT APPLICATION

(11) **EP 4 751 959 A1**
(43) Date of publication of application: **03.06.2026**
(21) Application number: 25217963.5
(22) Date of filing: 24.11.2025
(51) Int. Cl.: B60K 15/03, B60K 15/07

(54) **HYDROGEN PROPELLED MOTOR VEHICLE**

(30) Priority: 28.11.2024 IT 202400026883
(71) Applicant: FERRARI S.p.A., 41100 Modena (IT)
(72) Inventor: FAVARETTO, Fabrizio, 41100 MODENA (IT)
(74) Representative: Studio Torta S.p.A.

(57) **Abstract**

A hydrogen propelled motor vehicle (1) is described, which comprises: a tank (15) designed to be filled with hydrogen; a frame (10) designed to support the tank (15); and a valve (17) fixed to the frame (10) and designed to selectively allow the tank (15) to be filled with and emptied from hydrogen; the tank (15) comprises a first portion (20) fixed to the valve (17); a second portion (21) free to deform as a result of the variation in pressure inside the tank (15); and a third portion (22); the motor vehicle (1) comprises a containing element (32) interposed between the third portion (22) of the tank (15) and the frame (10).

## Description

### CROSS-REFERENCE TO RELATED APPLICATIONS

This patent application claims priority from Italian patent application no. 102024000026883 filed on November 28, 2024, the entire disclosure of which is incorporated herein by reference.

### TECHNICAL FIELD

The invention relates to a motor vehicle, in particular to a hydrogen propelled motor vehicle.

### BACKGROUND

These motor vehicles comprise, in a known manner, a tank designed to contain hydrogen and a valve designed to selectively close or open an access duct accessing the tank, so as to allow the tank to be filled and emptied.

The tanks commonly used in such vehicles have a cylindrical or spherical shape and are made of a rigid material.

Recently, tanks have been introduced, which feature alternative geometries provided with concave walls and are made of a deformable material.

Due to the fact that they are made of a deformable material, the increase/decrease in pressure that occurs during the hydrogen filling/emptying phases causes a change in the volume and shape of the tank.

However, the tank must be rigidly constrained to the duct in the area of the filling valve. This is due to the fact that the duct must be able to withstand the high pressures of hydrogen and, therefore, must be designed with thick and, hence, rigid walls.

In the industry, such tanks need to be constrained to the duct, so as to allow them to change in volume and shape during the hydrogen filling and emptying phases.

### SUMMARY

The object of the invention is to provide a motor vehicle, which is capable of fulfilling the need discussed above.

The aforesaid object is reached by the invention, as it relates to a motor vehicle as defined in claim 1.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 is a perspective view of a motor vehicle according to the invention;
- figure 2 is a perspective view, according to a first visual angle and on a larger scale, of first components of a rear portion of the motor vehicle of figure 1 with parts removed for greater clarity;
- figure 3 is an exploded perspective view of the first components of figure 2;

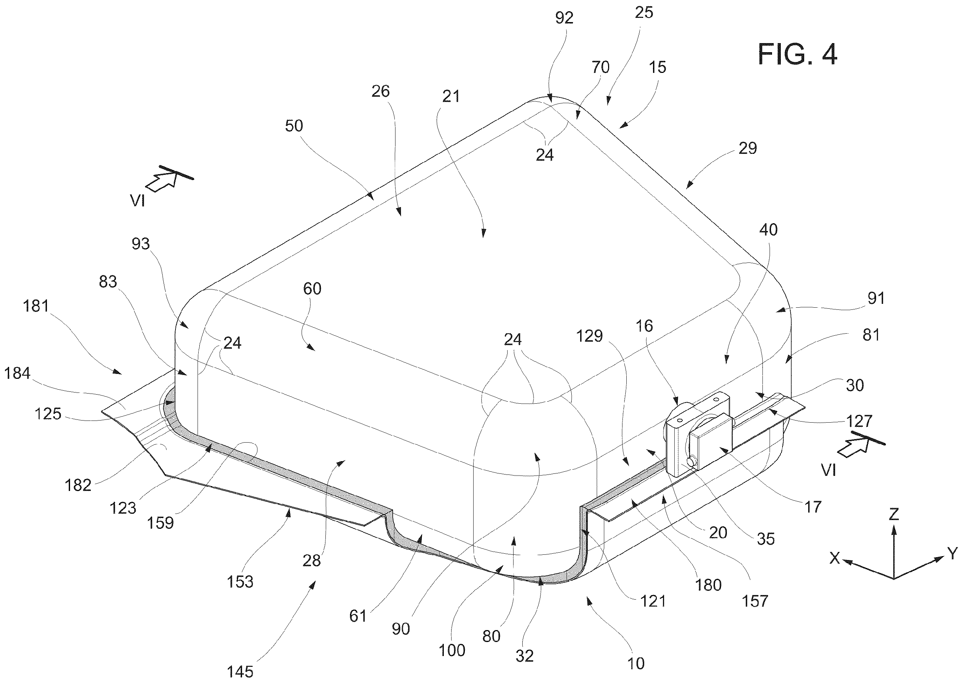

- figure 4 shows, in a perspective view, the first components of figures 2 and 3;
- figure 5 shows, in an exploded perspective view, the components of figure 4;
- figure 6 is a cross section along line VI-VI of figure 4;
- figure 7 is a top view of the details of figures 3 to 5; and

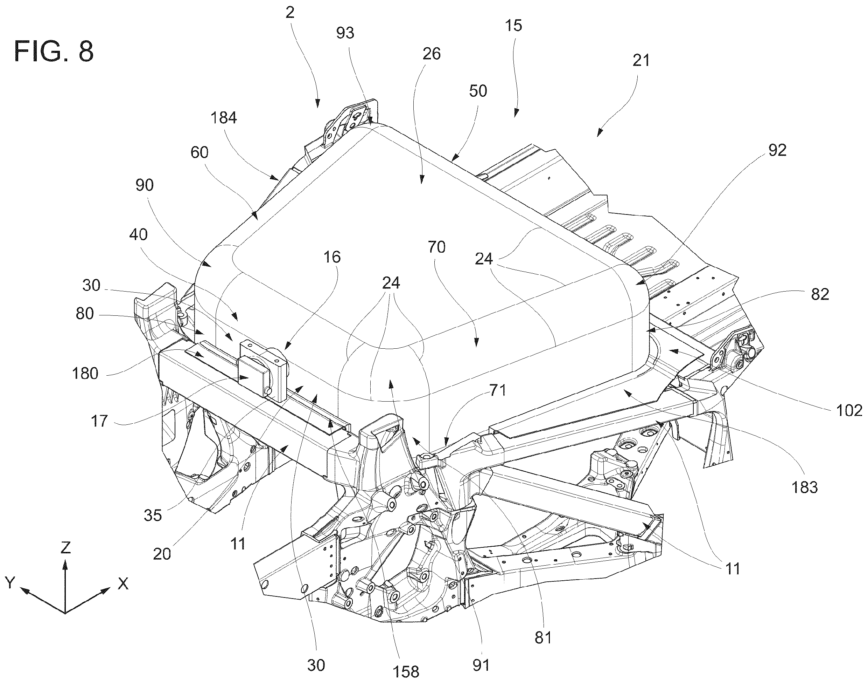

- figure 8 is a perspective view, according to a second visual angle and on a larger scale, of the first components of figures 2 to 7.

### DESCRIPTION OF EMBODIMENTS

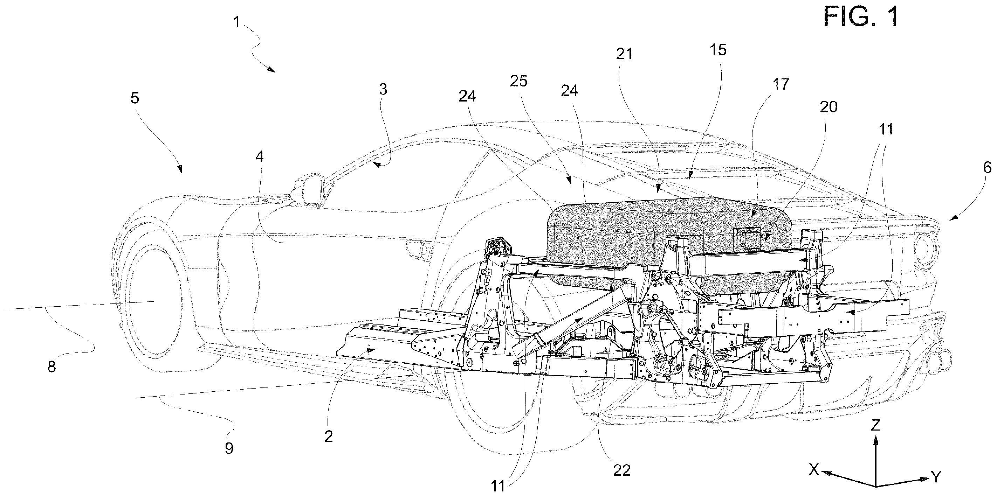

With reference to figure 1, number 1 indicates a motor vehicle.

In particular, the motor vehicle 1 comprises a hydrogen propulsion system.

The motor vehicle 1 comprises:
- a body 2 delimiting a passenger compartment 3; and
- a pair of doors 4 hinged to the body 2 and a roof.

The body 2 further comprises a front 5 and a rear 6.

Furthermore, it is possible to define:
- a longitudinal axis X integral to the motor vehicle 1, which, in use, is horizontal and parallel to a normal driving direction of the motor vehicle 1;

- a transverse axis X integral to the vehicle 1, which, in use, is horizontal and orthogonal to the axis X; and
- an axis Z integral to the vehicle 1, which, in use, is vertical and orthogonal to the axes X, Y.

Furthermore, expressions such as "above", "under", "in front of", "behind" and others similar to them are used with reference to normal a normal driving condition of the motor vehicle 1, in which it moves parallel to the axis X.

The motor vehicle 1 further comprises, with reference to the normal driving direction parallel to the axis X:
- a front axle 8; and
- a rear axle 9 comprising a pair of rear wheels.

The motor vehicle 1 further comprises:
- a frame 10 fixed to the body 2;
- a tank 15, which can be supplied with hydrogen and is supported by the frame 10;
- a duct 16 fluidly connected to the tank 15 and designed to allow hydrogen to flow in during a "filling" of the tank 15 and to allow hydrogen to flow out during an "emptying" of the tank 15; and
- a valve 17, which is interposed along the duct 16 and is selectively movable between an open position, in which it allows hydrogen to flow into/out of the tank 15, and a closed position, in which it prevents hydrogen from flowing into/out of the tank 15.

The duct 16 is, in the specific case shown herein, traversed by hydrogen under pressure at 700 bar and consequently is rigid.

In the specific case shown herein, the rear 6 houses the frame 10, the tank 15, the duct 16 and the valve 17.

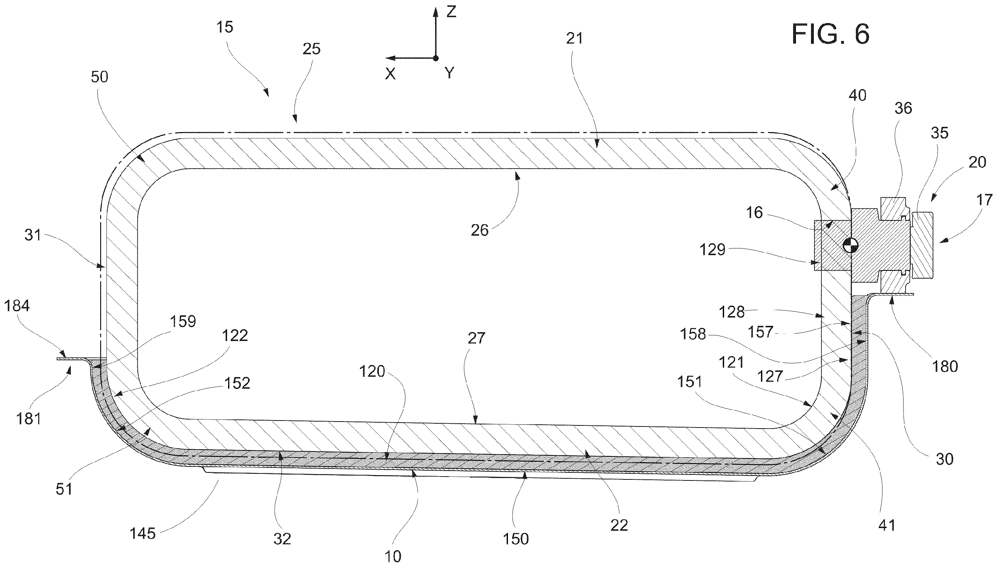

Advantageously, the tank 15 comprises (figure 6):
- a portion 20 fixed to the valve 17;
- a portion 21 free to deform as a result of the variation in pressure inside the tank 15; and
- a portion 22;
the motor vehicle 1 comprises a containing element 32 interposed between the portion 22 and the frame 10.

With reference to Figure 6, the portions 20, 21, 22 are shown with a solid line in their non-deformed configuration, namely when the pressure inside the tank 15 is the same as the pressure of atmospheric air.

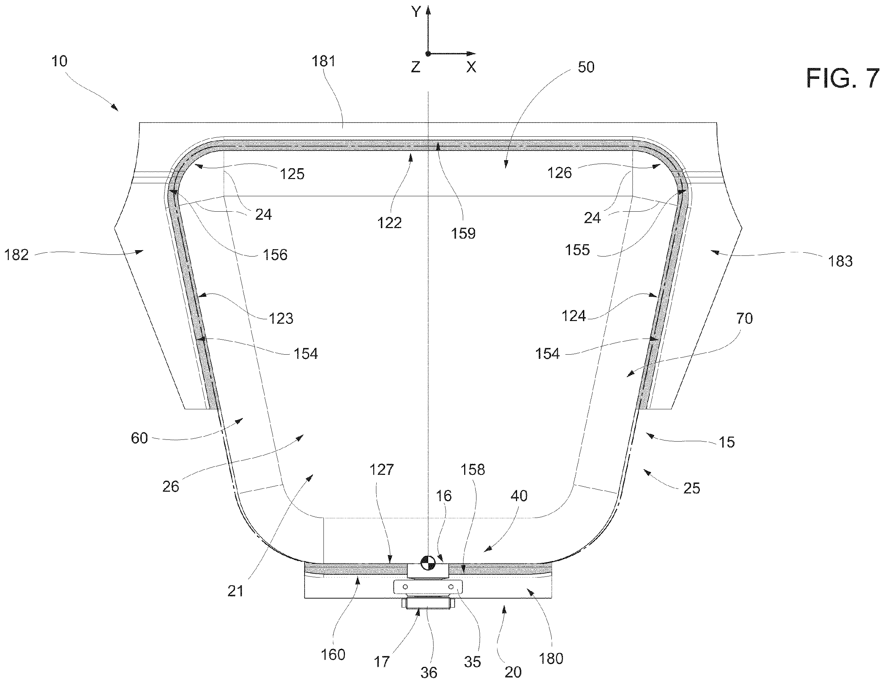

In figures 6 and 7, the dashed line indicates the deformed configuration of a median plane of the tank 15, following the increase in pressure inside the tank 15 due to the filling with hydrogen.

The portions 21, 22 are shaped like cup-shaped bodies open towards one another and facing one another along the axis Z.

In the specific case shown herein, the portions 21, 22 are arranged above and below, respectively.

More in detail, the tank 15 comprises:
- a casing 25 made of an elastically yielding material and defining the portions 20, 21 and 22; and
- a plurality of tie rods 24 fixed to the casing 25 and designed to give a desired shape to the casing 25.

The tie rods 24 are manufactured, in the specific case shown herein, as carbon pipes.

The tank 15 varies its volume as a result of the increase/decrease in the pressure inside it.

More in particular, the tank 15 decreases its volume in a manner more than proportional to the increase in pressure, when the latter exceeds 700 bar.

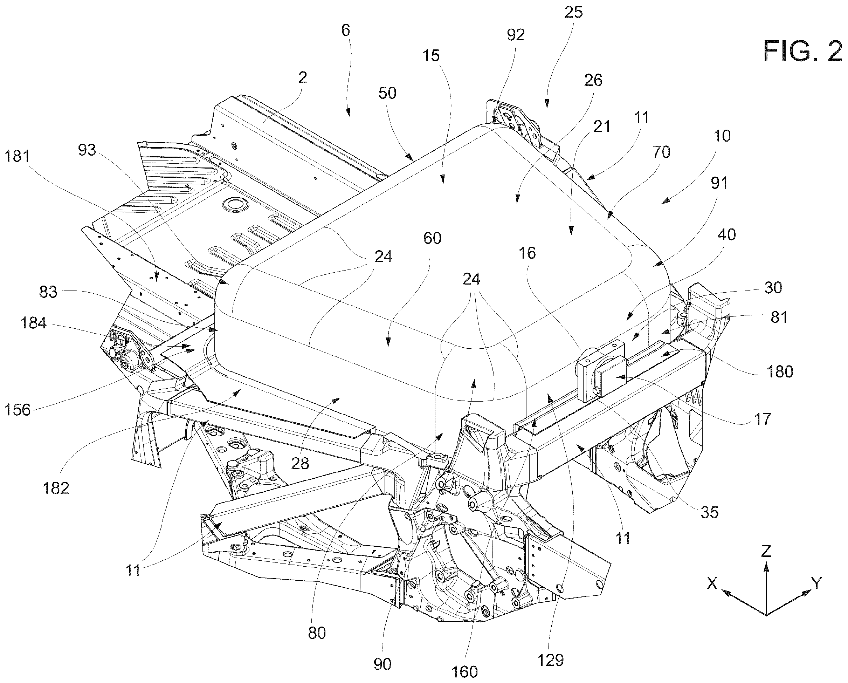

The casing 25 comprises, in turn, (Figure 2 a 8):
- a pair of walls 26, 27 opposite one another, flat and orthogonal to the axis Z and arranged above and below, respectively;
- a pair of walls 28, 29 opposite one another along the axis Y and lying on respective planes orthogonal to the axis Y; and
- a pair of walls 30, 31 opposite one another along the axis X and lying on respective planes orthogonal to the axis X.

The casing 25 further comprises:
- a concave wall 40 extending between the walls 30, 26 and a concave wall 41 extending between the walls 30, 27;
- a concave wall 50 extending between the walls 31, 26 and a concave wall 51 extending between the walls 31, 27;
- a concave wall 60 extending between the walls 28, 26 and a concave wall 61 extending between the walls 28, 27; and
- a concave wall 70 extending between the walls 29, 26 and a concave wall 71 extending between the walls 29, 27.

The casing 50 finally comprises:
- a concave wall 80 interposed between the walls 28, 30; a concave wall 81 interposed between the walls 29, 30; a concave wall 82 interposed between the walls 29, 31; and a concave wall 83 interposed between the walls 31, 28;
- a concave wall 90 interposed between the walls 60, 40; a concave wall 91 interposed between the walls 40, 70; a concave wall 92 interposed between the walls 70, 50; and a concave wall 93 interposed between the walls 50, 60; and
- a concave wall 100 interposed between the walls 61, 41; a concave wall 101 interposed between the walls 41, 71; a concave wall 102 interposed between the walls 71, 51; and a concave wall 103 interposed between the walls 51, 61.

In particular, the walls 28; 29; 30; 31 are interposed between the walls 60, 61; 70, 71; 40, 41; 50, 51.

The walls 80; 81; 82; 83 are interposed between the walls 90, 100; 91, 101; 92, 102; 93, 103.

With particular reference to figure 6, the portion 20 comprises the wall 30. The portion 21 comprises the walls 31, 28, 29, 40, 50, 60, 70, 90, 91, 92, 93.

The portion 22 comprises the walls 27, 41, 51, 61, 71, 100, 101, 102, 103.

The tie rods 24 delimit the walls 26, 27, 28, 29, 30, 40, 41, 50, 51, 60, 61, 70, 71, 80, 81, 82, 83, 90, 91, 92, 93, 100, 101, 102 and 103.

The portions 21, 22 are contiguous with one another in the area of the respective walls 31, 51, which overlap and are contiguous with one another, and are separated from one another by the wall 30 of the portion 20 (Figure 6).

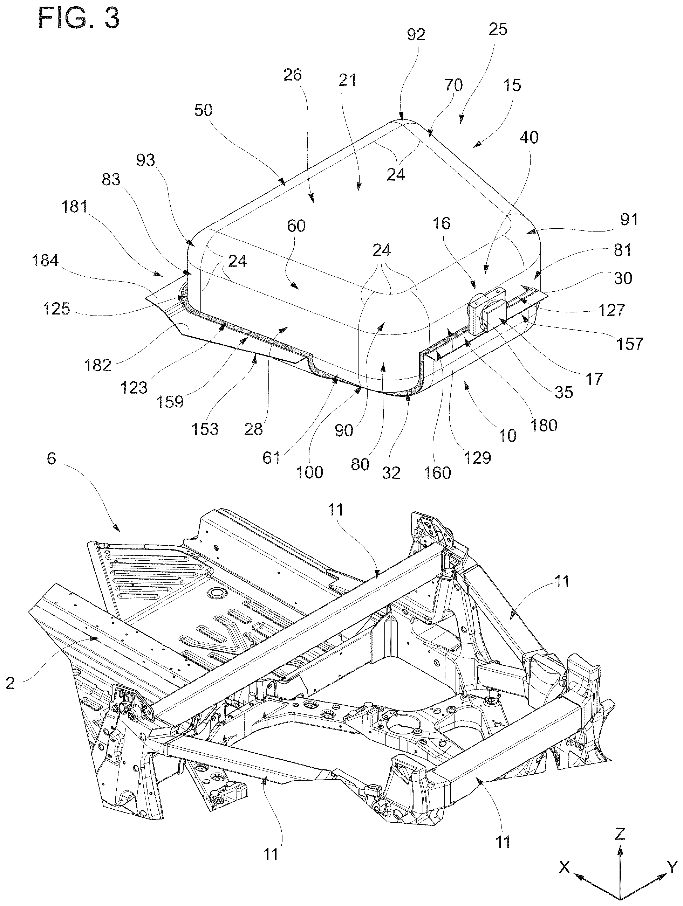

With particular reference to figures 2, 3 and 6, the valve 17 comprises:
- a support 35 fixed to the frame 10 and to which the portion 20 is fixed; and
- a shutter 36 movable relative to the support 35 so as to forbid or permit the flow of hydrogen through the duct 16.

More in detail, the containing element 32 is hollow and shaped like a tub.

The containing element 32 also has a shape corresponding to the shape of the portion 22 of the tank 15.

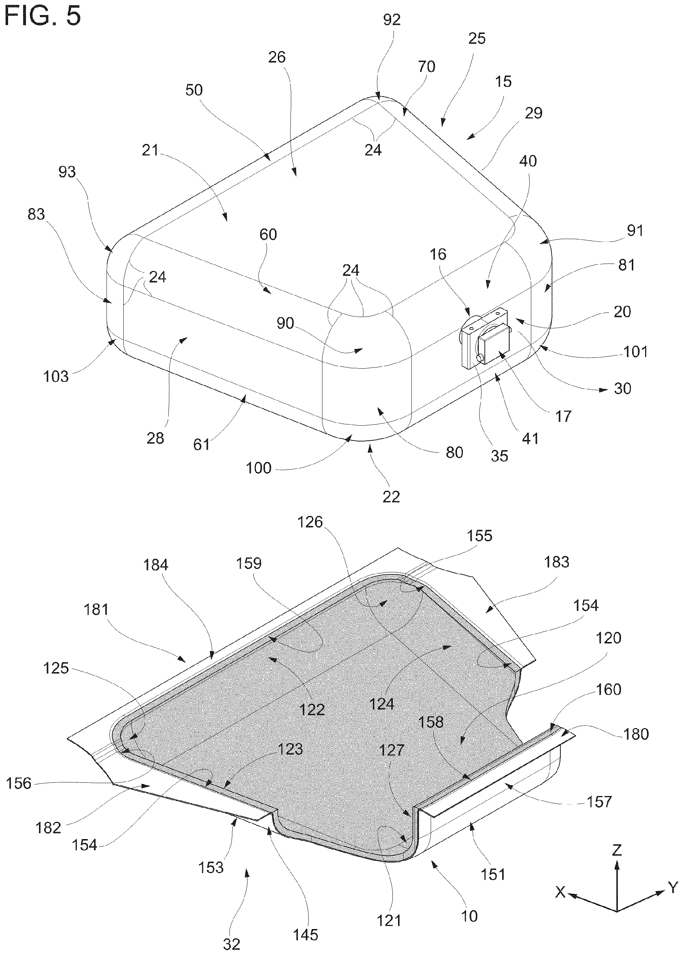

More in detail, the containing element 32 comprises, in turn, with particular reference to Figure 5:
- a bottom wall 120 orthogonal to the Z axis and arranged so as to abut on the wall 27 of the tank 15;
- a pair of concave walls 121, 122 opposite one another along the axis X and arranged so as to abut on respective walls 41, 51 of the tank 15;
- a pair of concave walls 123, 124 opposite one another along the axis Y and arranged so as to abut on respective walls 61, 71 of the tank 15;
- a concave wall 125 interposed between the walls 122, 123 and arranged so as to abut on the wall 103 of the tank 15; and
- a concave wall 126 interposed between the walls 122, 124 and arranged so as to abut on the wall 102 of the tank 15.

In particular, the walls 121, 122, 123, 124, 125, 126 project from the wall 120.

The containing element 32 further comprises a flat wall 127 orthogonal to the axis X, contiguous with the wall 121 and located on the opposite side of the wall 121 relative to the wall 120.

The wall 127 is spaced apart from the walls 123, 124.

The wall 30 of the portion 20 comprises, in turn (Figure 6):
- a lower region 128, on which the wall 127 abuts; and
- an upper region 129, into which the duct 16 opens.

The regions 128, 129 define respective halves of the wall 30.

The region 129 is interposed between the wall 40 and the region 128.

The frame 10 comprises, in turn (Figures 5 and 6):
- a main portion 145, on which the containing element 32 abuts and which has a shape corresponding to the containing element 32; and
- a plurality of fins 180, 181, 182 protruding from the main portion 145 and fixed to respective cross members 11 of the body 2.

In particular, the main portion 145 comprises, in turn:
- a bottom wall 150 lying on a plane orthogonal to the axis Z;
- a pair of concave walls 151, 152 opposite one another along the axis X and arranged so as to abut on respective walls 121, 122 of the containing element 32;
- a pair of concave walls 153, 154 opposite one another along the axis Y and arranged so as to abut on respective walls 123, 124 of the containing element 32;
- a concave wall 155 interposed between the walls 152, 153 and arranged so as to abut on the wall 125 of the containing element 32; and
- a concave wall 156 interposed between the walls 152, 154 and arranged so as to abut on the wall 126 of the containing element 32.

In particular, the walls 151, 152, 153, 154, 155, 156 project from the bottom wall 150 of the containing element 32.

The frame 10 further comprises a wall 157 contiguous with the wall 151 and located on the opposite side of the wall 151 relative to the bottom wall 150.

The wall 157 is flat and lies on a plane orthogonal to the axis X and is arranged so as to abut on a lower portion 158 of the wall 127 of the containing element 32 in the area of the valve 17.

The frame 10 finally comprises:
- a fin 180 elongated parallel to the axis Y and lying on a plane orthogonal to the axis Z; and
- a wall 181 lying on a plane orthogonal to the axis Z and spaced apart from the fin 180 along the axis X.

The fin 180 protrudes from an end edge 160 of the wall 157 opposite the wall 152 on the side of the valve 17 and extending parallel to the axis Y.

The wall 181 projects from an end edge 159 of the walls 151, 153, 154, 155, 156 opposite the bottom wall 150.

The wall 181 comprises, in turn:
- a pair of fins 182, 183 opposite one another along the axis Y and protruding from the edge 159 externally to the bottom wall 150; and
- a fin 184 interposed between and contiguous with the fins 182, 183, opposite the fin 180 along the axis X and protruding from the edge 159 on the side opposite the fin 180.

The fin 180 is spaced apart from the fins 182, 183
In particular, the wall 120 of the containing element 32 is interposed between the bottom wall 150 of the frame 10 and the wall 27 of the tank 15.

The wall 121 of the containing element 32 is interposed between the wall 151 of the frame 10 and the wall 41 of the tank 15.

The wall 127 of the containing element 32 is interposed between the wall 157 of the frame 10 and the portion 128 of the wall 30 of the tank 15.

The walls 123, 124 of the containing element 32 are interposed between respective walls 61, 71 of the tank 15 and corresponding walls 153, 154 of the frame 10.

The walls 125, 126 of the containing element 32 are interposed between respective walls 103, 102 of the tank 15 and corresponding walls 155, 156 of the frame 10.

As shown in Figure 2, the fin 180 and fins 182, 183 of the wall 81 of the frame 10 are fixed to respective cross members 11 of the rear 6 of the body 2.

In use, the tank 15 is filled with or emptied from hydrogen through the filling valve 17.

Consequently, the pressure inside the tank 15 increases or decreases.

Since the casing 25 of the tank 15 is made of an elastically deformable material, the increase (decrease) in the pressure causes a decrease (increase) in the volume of the tank 15. More precisely, the decrease in the volume of the tank 15 is more than proportional to the increase in pressure, when the latter exceeds 700 bar.

During this change in volume, the wall 30 defining the portion 20 of the tank 15 is constrained to the valve 17 and remains substantially non-deformed.

With reference to Figure 6, the walls 30, 28, 29, 40, 50, 60, 70, 90, 91, 92, 93 defining the portion 21 of the tank 15 are free to deform.

The walls 27, 41, 51, 61, 71, 100, 101, 102, 103 defining the portion 22 of the tank 15 deform by remaining in contact against the containing element 32 made of an elastically deformable material.

The containing element 32 thus determines a yielding constraint on the portion 22, which allows the tank 15 to expand and contract, respectively, during the hydrogen filling and emptying phases.

Therefore, it is possible to use tanks 15 made of an elastically deformable material and with shapes that are rather different from the spherical or cylindrical ones commonly used in the known solutions discussed in the introduction to the description.

Consequently, the flexibility in the choice of the shape of the tank 15 and in the arrangement of the tank 15 inside the motor vehicle 1 is particularly increased.

An examination of the motor vehicle 1 manufactured according to the invention clearly shows the advantages that it makes possible to achieve.

More in detail, the portion 22 of the tank 15 is fixed to the valve 17, the portion 21 of the tank 15 is free to deform as a result of the variation in pressure inside the tank 15 and the portion 22 of the tank 15 contacts the containing element 32 fixed to the frame 10.

In this way, on the one hand, it is possible to constrain the portion 20 of the tank 15 to the fixed duct 16, in which hydrogen flows during the filling/emptying of the tank 15.

On the other hand, the containing element 32 is made of a deformable material and allows the tank 15 to expand and contract, respectively, during the hydrogen filling and emptying phases.

The containing element 32 also retains the tank 15 during the acceleration and deceleration phases of the motor vehicle 1.

Finally, the motor vehicle 1 according to the invention can be subjected to changes and variations, which, though, do not go beyond the scope of protection set forth in the appended claims.

## Claims

1. A hydrogen propelled motor vehicle (1), comprising:
- a tank (15) designed to be filled with hydrogen:
- a frame (10) designed to support said tank (15); and
- a valve (17) fixed to said frame (10) and designed to selectively allow said tank (15) to be filled with and emptied from hydrogen;
**characterized in that** said tank (15) comprises:
- a first portion (20) fixed to said valve (17);
- a second portion (21) free to deform as a result of the variation in pressure inside the tank (15); and
- a third portion (22);
said motor vehicle (1) further comprising a containing element (32) interposed between said third portion (22) of said tank (15) and said frame (10).

2. The motor vehicle according to claim 1, **characterized in that** said first portion (20) comprises a first flat wall (30), and **in that** said second and third portions (21, 22) are concave and shaped like respective cup-shaped bodies open towards one another and facing one another;
said second and third portions (21, 22) being contiguous with one another in the area of respective second and third walls (31, 51) overlapping and contiguous with one another;
said first wall (30) being interposed between a fourth and a fifth wall (40, 41) of respective second and third portions (21, 22) on the side opposite said first wall (31) along a first axis (X).

3. The motor vehicle according to claim 2, **characterized in that** said tank (15) comprises:
- a pair of fifth and sixth walls (26, 27), which are opposite one another along a second axis (Z) transverse to said first axis (X), are flat, lie on respective planes orthogonal to said second axis (Z) and are defined by said second portion (22) and by said third portion (23), respectively;
said fourth and fifth walls (40, 41) being concave;
said third, fifth and sixth walls (31, 26, 27) being flat and orthogonal to said second axis (Z).

4. The motor vehicle according to any one of the preceding claims, **characterized in that** said tank (15) comprises, in turn, a casing (25) made of an elastically yielding material and defining said first, second and third portions (20, 21, 22).

5. The motor vehicle of claim 4, **characterized in that** said tank (15) comprises a plurality of tie rods (24) fixed to the casing (25) and designed to stiffen said casing (25) so as to give a desired shape to said first, second and third portions (20, 21, 22).

6. The motor vehicle according to any one of the preceding claims, **characterized in that** said containing element (32) is shaped like an open cup body, and **in that** it comprises a sixth wall (127), which is flat and lies on a plane orthogonal to said first axis (X);
said sixth wall (127) being arranged so as to strike against a relative first region (128) of said first wall (30) contiguous with said third portion (22).

7. The motor vehicle according to any one of the foregoing claims, **characterized in that** said containing element (32) is made of a spongy material.

8. The motor vehicle according to any one of the preceding claims, **characterized in that** said frame (10) comprises, in turn:
- a main portion (145) surrounding said containing element (32); and
- a plurality of fins (180, 182, 183) protruding from said main portion (145) and fixed to said body (2);
said containing element (32) being interposed between said main portion (145) and said third portion (22) of said tank (15).

9. The motor vehicle according to any one of the preceding claims, **characterized in that** it comprises a duct (16), which is fluidly connected, in a selective manner, to an inner volume of said tank (10) to allow said tank (15) to be filled with and emptied from said hydrogen;
said duct (16) being open inside said first portion (20) ;
said valve (17) being capable of being operated so as to fluidly connect, in a selective manner, said duct (16) to said inner volume of said tank (15).

10. The motor vehicle according to claim 9, when it depends on claim 2, **characterized in that** said duct (16) is open inside a second region (129) of said first wall (30) contiguous with said second portion (21);
said second region (129) being interposed between said first region (128) of said first wall (30) and said fourth wall (40) of said second portion (21).

11. The motor vehicle according to any one of the preceding claims, **characterized in that** said body (2) comprises, in turn:
- a front (5) comprising a first axle (8); and
- a rear (6) comprising a second axle (9) and housing said tank (15), said frame (10) and said containing element (32).
